# EUROPEAN PATENT SPECIFICATION

(11) **EP 0 709 662 B1**
(45) Date of publication and mention of the grant of the patent: **06.05.1999**
(21) Application number: 94117154.8
(22) Date of filing: 31.10.1994
(51) Int. Cl.: G01L 23/22

(54) **Knock detection system**
Klopferkennungssystem
Système de détection de cliquetis

(43) Date of publication of application: 01.05.1996
(73) Proprietor: MOTOROLA, INC., Schaumburg, IL 60196 (US)
(72) Inventor: Plee, Steven L., Brighton, Michigan 48116 (US); Remboski, Donald J., Dearborn, Michigan 48126 (US); Lynch, Marvin Lester, Detroit, Michigan 48221 (US)
(74) Representative: Hudson, Peter David

(56) References cited:
- EP-A- 0 421 952
- EP-A- 0 590 893
- WO-A-89/11088
- GB-A- 2 055 147
- PATENT ABSTRACTS OF JAPAN vol. 8, no. 192 (P-298) 4 September 1984 & JP-A-59 079 827 (HITACHI MAIKURO COMPUTER ENGINEERING KK ET AL.) 9 May 1984

## Description

### Field of the Invention

This invention is related to the field of knock detection within an internal combustion engine, and more specifically to a system for extracting an accurate representation of an engine knock signal from a broadband spectra provided by an engine mounted vibration sensor.

### Background of the Invention

Engine control systems with knock detection capability, are used to detect and eliminate knocking conditions, characteristic of the operation of internal combustion engines. Eliminating a knocking condition is important because, left unchecked engine power and efficiency will suffer, and combustion chamber and spark plugs will be damaged.

Knock detection systems typically use an accelerometer based sensor mounted on an engine for converting engine vibration into an electrical signal. This electrical signal includes a broad spectra of information about the engine's operating condition. Included in this signal is the knock information, and extraneous information known as noise. When knocking occurs, the knock component of the signal results from gas oscillations in the combustion chamber during combustion. The noise component of the signal generally is significant and can be large enough to mask the knock component. The noise component may be comprised of several sources including piston slap vibration, valve closing vibration, and other systemic noise.

Various techniques have been applied to extract the knock information from the electrical signal representative of engine vibration, however, these techniques have been limited in accuracy and reliability. The knock component of the signal varies considerably in magnitude and frequency over the full operating range of the engine. This partially is related to, gas temperature, and combustion chamber geometry. Moreover, there are variations from engine to engine and from cylinder to cylinder within the same engine that affect the relationship of the knock component to the noise component.

To provide for this range of conditions, typically knock detection schemes use a broadband bandpass filter to extract knock information from the broadband electrical signal. Some schemes include engine crank angle based windowing, to restrict the analysis of knock to when it could likely occur in the combustion cycle. Other schemes (see e.g. EP-A-0 421 952) attempt to improve the signal-to-noise ratio of the measurement by employing a second, or noise, bandpass filter having a passband located distant to the passband of the knock bandpass filter. The output of this noise bandpass filter is then subtracted from the output of the knock bandpass filter. The concept here is that the noise bandpass filter will indicate the level of noise signal located apart from the knock bandpass filter. This assumes that noise is broadband, and that the noise component in the knock band is of substantially the same magnitude. Thus, by subtracting the output of the noise bandpass filter from the output of the knock bandpass filter a more accurate representation of the knock component may be obtained.

This scheme is defective for several reasons, including that the filters intrinsically have a phase delay error. When the noise is subtracted this error detracts from accurately canceling the noise component of the signal. Further, since the noise band is located apart, only the noise located apart from the characteristic knock frequencies can be detected. In fact, the noise is not really broadband and there can be substantial noise located close to the characteristic knock frequencies that will not be canceled in this scheme. Also, with present schemes, extensive calibration is required to determine for each engine time a characteristic knock frequency, and if used, appropriate crank angle window, and a knock threshold. Additionally, as the engine speed increases, the systemic noise content increases substantially, and current systems perform inadequately. Finally, in these schemes the knock detection threshold is not adjusted with sensor gains and system aging.

To further improve accuracy some systems use a multi-cycle averaging technique. Because of the dynamic characteristic of combustion within the combustion chamber, the knock component has a random behavior and therefore multi-cycle averaging works poorly.

What is needed is an improved system for detecting knock in internal combustion engines that is more reliable, and accurate, can detect knock at high engine speeds, requires minimum calibration and can be easily applied to different engine families.

### Summary of the Invention

According to a first aspect of the present invention there is provided an apparatus as claimed in claim 1.

According to a second aspect of the invention there is provided a method as claimed in claim 8.

### Brief Description of the Drawings

FIG. 1 is a block diagram of a knock detection system, in accordance with the invention.

FIG. 2 is a chart representing a broadband spectra signal, derived from an accelerometer as described in the preferred embodiment.

FIG. 3 is a chart representing a knock logic signal extracted by a knock detection apparatus, as described in the preferred embodiment.

FIG. 4 is a block diagram, further illustrating the details of the knock detection apparatus block shown in FIG. 1

FIG. 5 is a chart showing a spectra plot representing the filtering characteristics of a knock spectra multiple bandpass infinite impulse response filter, as described in the preferred embodiment.

FIG. 6 is a chart showing a spectra plot representing the filtering characteristics of a noise spectra multiple bandpass infinite impulse response filter, as described in the preferred embodiment.

FIG. 7 is a chart showing a continuous time representation of a knock spectra signal output from a knock spectra multiple bandpass infinite impulse response filter, as described in the preferred embodiment.

FIG. 8 is a chart showing a continuous time representation of an absolute knock spectra signal output from an absolute value element.

FIG. 9 is a chart showing a continuous time representation of an absolute average knock spectra signal output from an infinite impulse response lowpass filter.

FIG. 10 is a chart showing a continuous time representation of a noise spectra signal output from a noise spectra multiple bandpass infinite impulse response filter, as described in the preferred embodiment.

FIG. 11 is a chart showing a continuous time representation of an absolute noise spectra signal output from an absolute value element.

FIG. 12 is a chart showing a continuous time representation of an absolute average noise spectra signal output from an infinite impulse response lowpass filter.

FIG. 13 is a chart showing a knock signal, as described in the preferred embodiment.

FIG. 14 is a chart showing an average negative knock-noise signal, used to derive a noise adaptive knock threshold.

### Detailed Description of a Preferred Embodiment

In a preferred embodiment a system for detecting the presence of a knock condition by interpreting a broadband spectra signal as measured from an internal combustion engine is described. The system includes a spectra measurement means for providing a broadband spectra simultaneously to a knock discrimination means, that provides a knock spectra signal representative of the average energy within a predetermined knock spectra, and a noise discrimination means, that provides a noise spectra signal representative of average energy within a predetermined noise spectra. The knock spectra signal is combined with the noise spectra signal to provide a knock signal when an engine knocking condition is detected. This system does this in real time during a singular combustion event. This avoids any inaccuracy due to multi-cycle averaging, or due to the characteristically random behavior of the knock spectra signal.

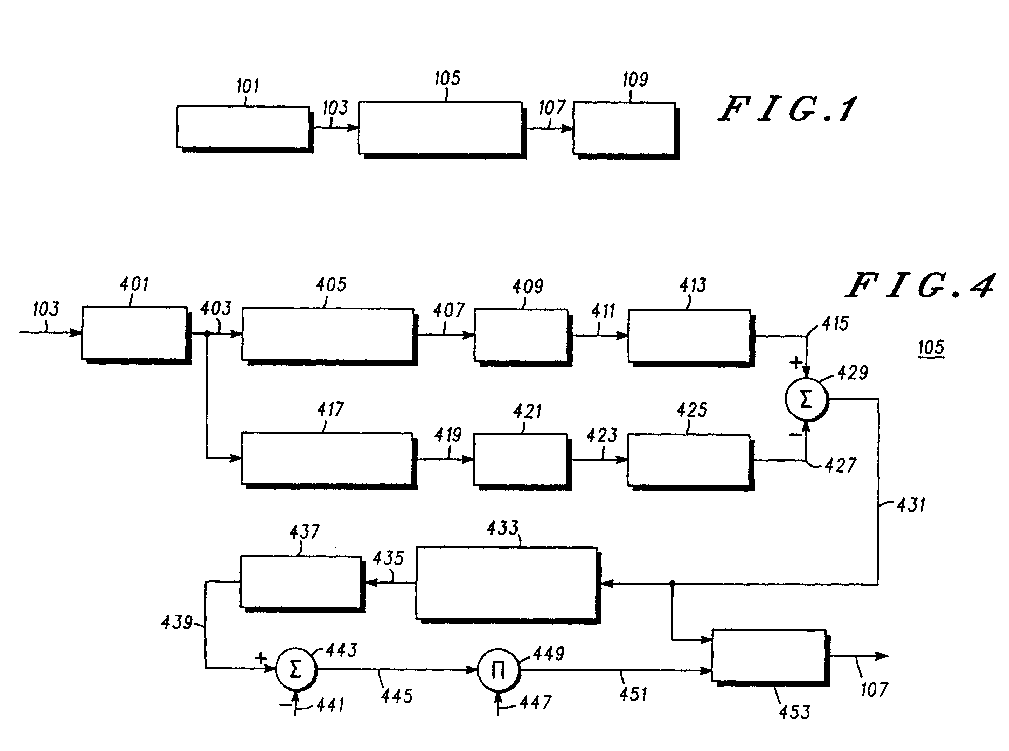

FIG. 1 is a system block diagram depicting the general configuration of a knock detection system. An engine mounted spectra measurement means, in this case an accelerometer 101, derives a broadband spectra signal 103, indicative of a broadband spectra vibration characteristic of the engine. This broadband spectra signal 103 is provided to a knock detection apparatus 105. If a knocking condition is detected the knock detection apparatus 105 will provide a knock logic signal 107 to an engine controller 109. This knock logic signal 107 is provided to the engine controller 109 to control, or eliminate the knocking of the engine. Of primary interest in this system, is the knock detection apparatus 105, which is detailed below.

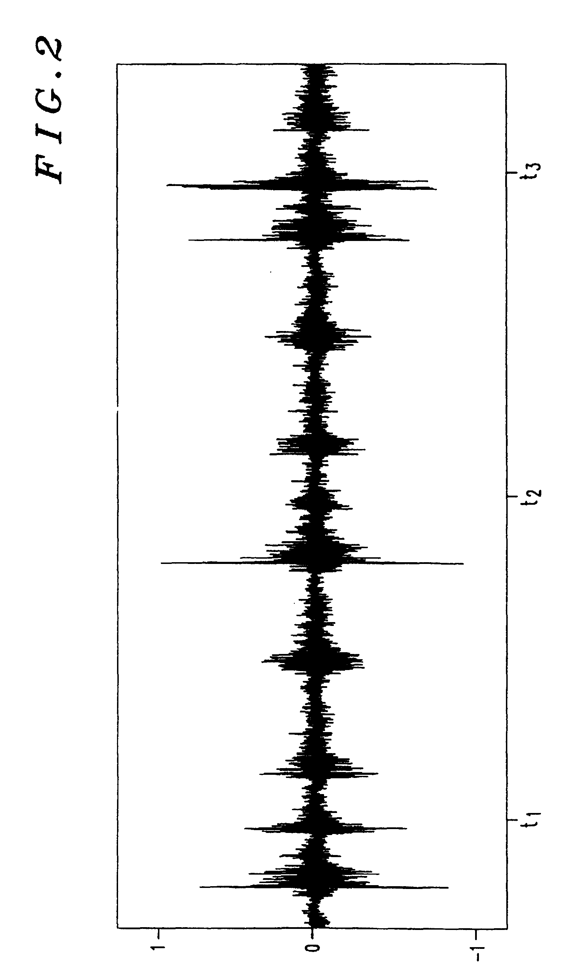

FIG. 2 is a chart representing the broadband spectra signal 103, derived from the accelerometer 101. This is shown for three consecutive cylinder firings corresponding to t₁, t₂, and t₃. Note that in the charts that follow the time reference marks are t₁, t₂, and t₃ used to indicate synchronicity with this broadband spectra signal 103. As described earlier, this electrical signal includes a broadband spectra of information about the engine's operating condition. Included in this signal is knock spectra information, and extraneous spectra information known as noise.

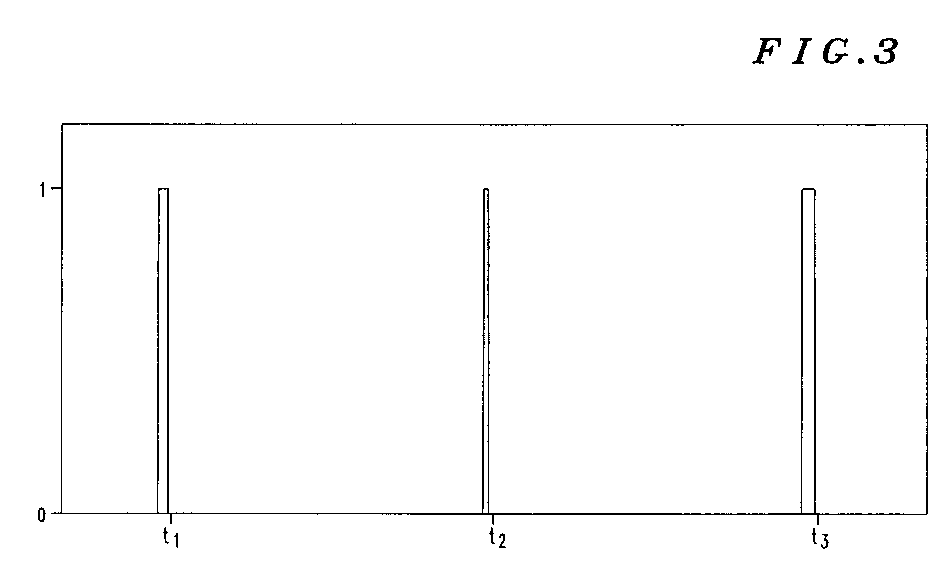

FIG. 3 is a chart representing the knock logic signal 107, as detected by the knock detection apparatus 105. In this chart three successive knock events are detected and shown. Next, the details of the knock detection apparatus 105 will be revealed.

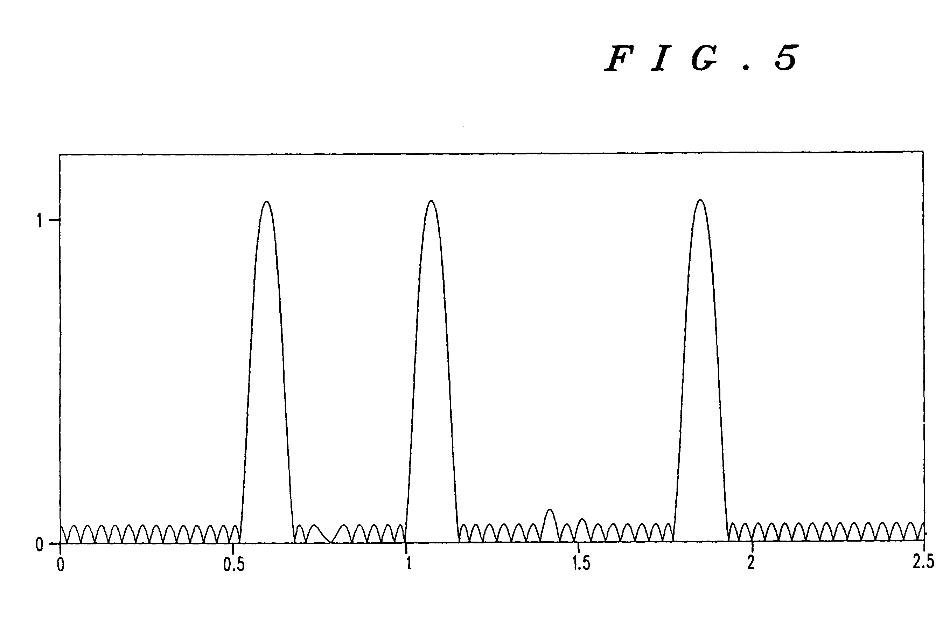

FIG. 4 is a block diagram that further illustrates the details of the knock detection apparatus 105.

In the preferred embodiment the knock detection apparatus 105 is shown using discrete time signal processing elements. Alternatively, those skilled in the art will recognize other equivalent embodiments such as those using conventional continuous time signal processing elements, such as analog elements. Discrete time signal processing was chosen because of the benefits it has over continuous time signal processing elements. These benefits include fewer components, stable deterministic performance, no aging, no drift, no adjustments, easily tunable for various engines, high noise immunity, and self test capability.

The broadband spectra signal 103 enters an analog-to-digital converter 401, for conversion from a continuous time analog signal 103 into a discrete time digital representation of the broadband spectra signal 403. Those skilled in the art will recognize many analog-to-digital converters suitable for the conversion. In FIG. 4 the remaining elements are emulated in microcoded software executed on a digital signal processor or DSP. In this case a Motorola DSP56001 device is used. The Motorola DSP56001 has the capability of executing over ten million instructions per second, and with 24 bit wide data paths provides 144 dB of dynamic range. Of course, those skilled in the art will recognize other equivalently useful DSP devices, or hardwired approaches vs. microcoded approaches.

The elements that follow are used to determine the average energy of the knock related spectra. Considering average energy is preferable, although not strictly required, because it further increases the accuracy of the detection system. This is done by discriminating between knock and noise signals, estimating average energy, and subtracting average noise energy from average knock energy.

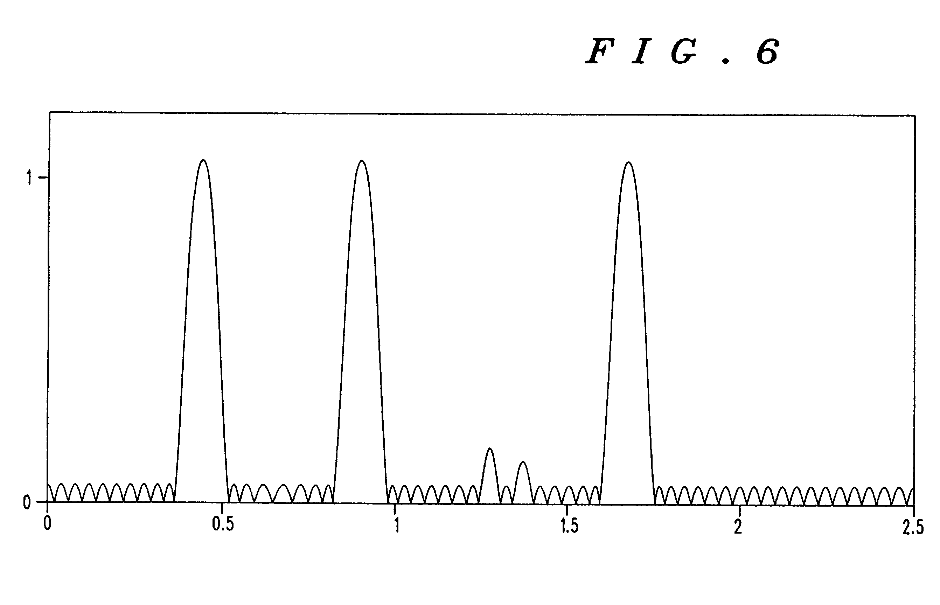

The analog-to-digital converter 401 provides the discrete time broadband spectra signal 403 both to a knock spectra multiple bandpass IIR, or infinite impulse response, filter 405 and a noise spectra multiple bandpass IIR filter 417. The knock spectra multiple bandpass filter 405 has a frequency response depicted in FIG. 5, and is pretuned to pass known knock mode frequencies, and to reject all other frequencies. The noise spectra multiple bandpass filter 417 has a frequency response depicted in FIG. 6, and is pretuned to pass a spectra adjacent to the known knock mode frequencies, and to reject all other frequencies. These filters, or frequency discrimination means, are tuned to extract narrowband spectra components from a broadband spectra. Note that the center frequencies of the respective multiple bandpass filters are interdigitated. This is because the noise occurring within the total bandwidth of the knock spectra, as delimited by the outermost knock filters, is determined by the noise filters located adjacently and within the knock spectra bandwidth. This is an important distinction over the prior art. Because of this arrangement knock can be more accurately determined.

As mentioned earlier, the Motorola DSP56001 device is programmed to emulate an IIR filter for filters 405 and 417. Of course, other filter configurations, such as a finite impulse response, or FIR filter may be used. The IIR filter was chosen because of its resource efficiency.

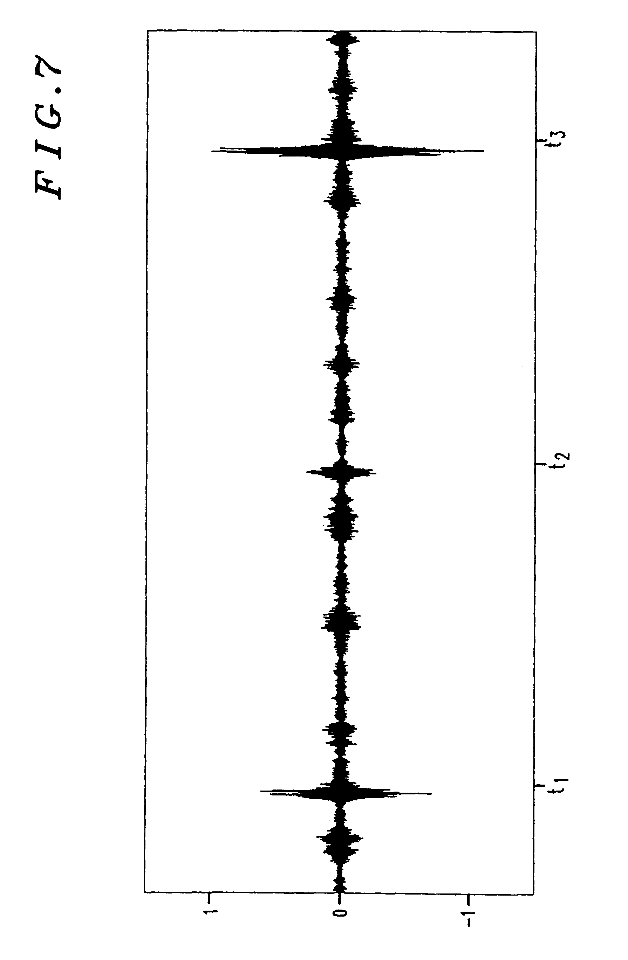

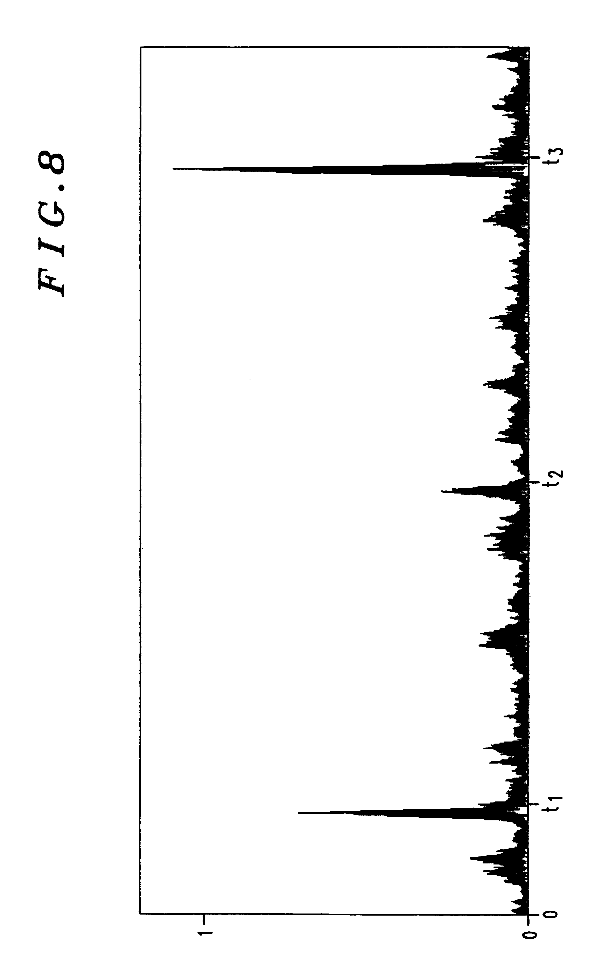

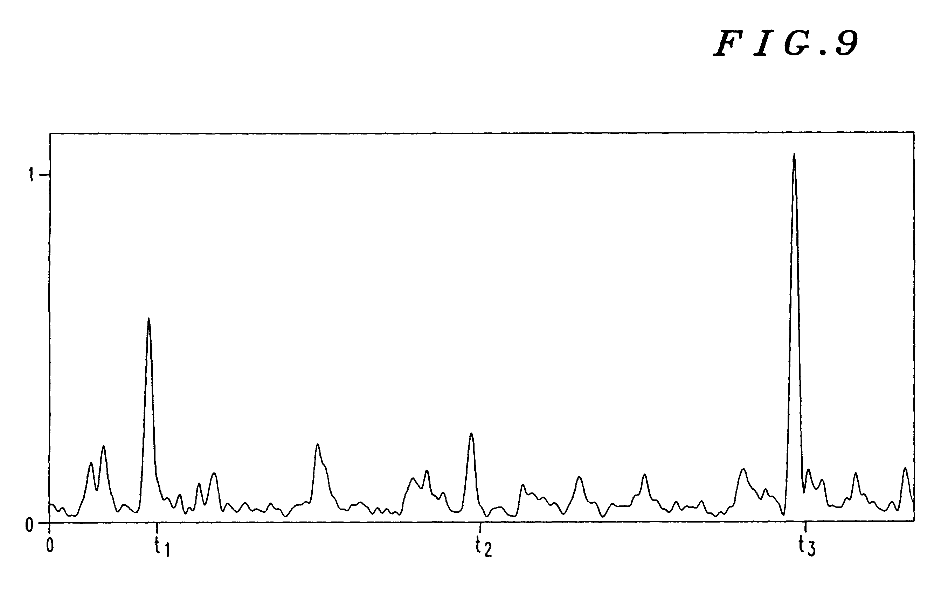

The discrete time signal output from the knock multiple bandpass filter 405 is shown in FIG. 7, and represents a knock spectra signal 407. This knock spectra signal 407 is provided to an absolute value element 409. The transformation of the signal 407 to its absolute value is accomplished by a simple software instruction on the Motorola DSP56001. The result is an absolute knock spectra signal 411. This absolute knock spectra signal 411 is shown in FIG. 8. This is done to provide a DC level for average energy estimation. The absolute knock spectra signal 411 is provided to an IIR lowpass filter element 413. This filter 413 provides an average absolute knock spectra signal 415, representative of average energy within the absolute knock spectra signal 411. The average absolute knock spectra signal 415 is shown in FIG. 9. To reiterate, elements including the multiple bandpass IIR filter 405, the absolute value element 409, and the IIR lowpass filter element 413 together provide a knock discrimination means for providing a knock spectra signal representative of average energy within a predetermined knock spectra as extracted from the broadband spectra signal.

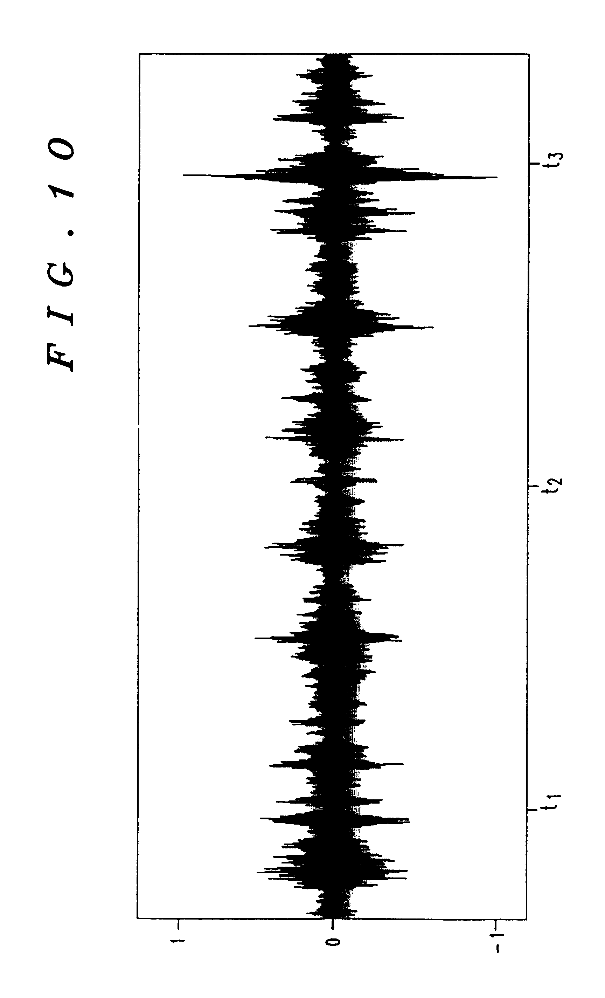

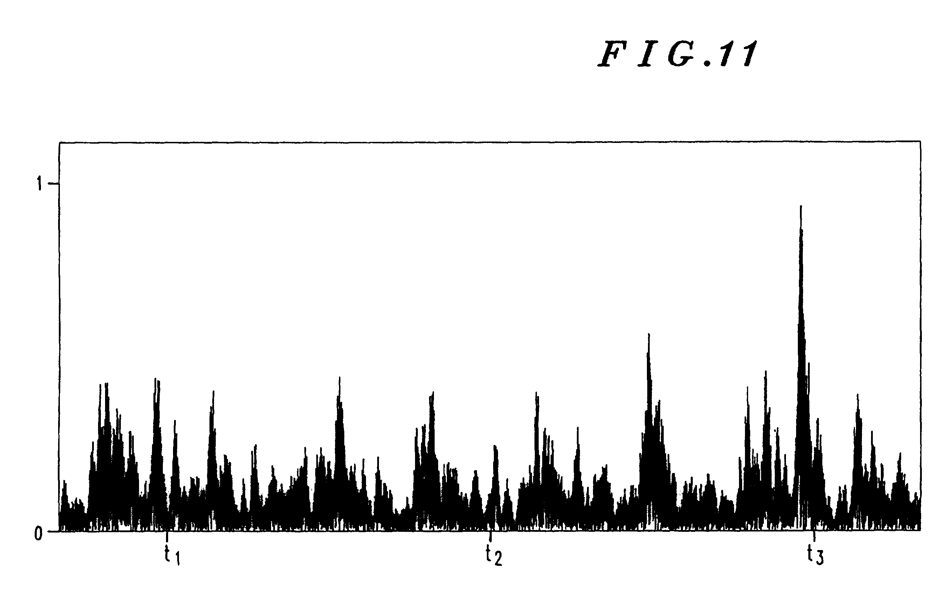

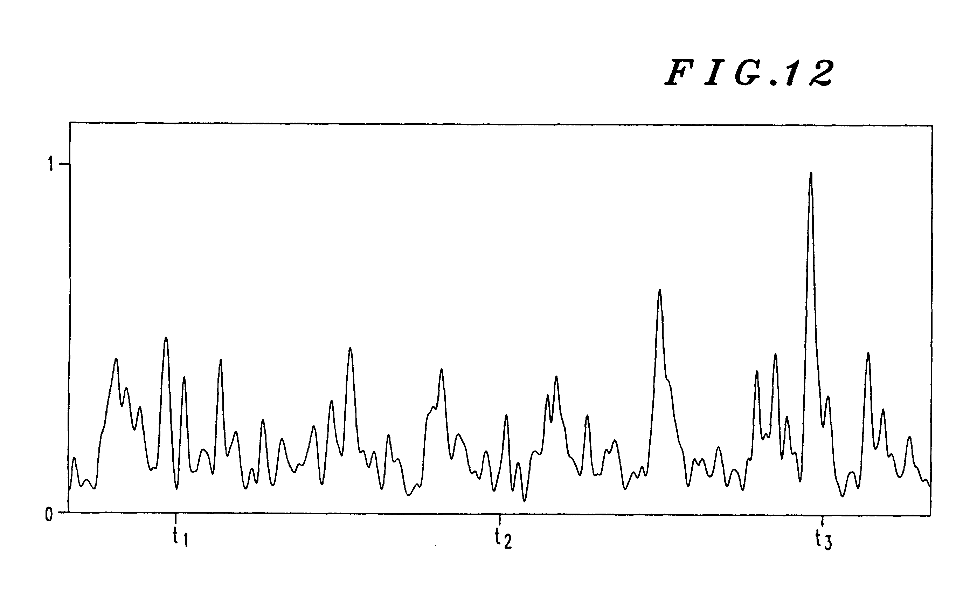

The discrete time signal output from the noise multiple bandpass filter 417 is shown in FIG. 10, and represents a noise spectra signal 419. This noise spectra signal 419 is provided to an absolute value element 421. The result from the absolute value instruction is an absolute noise spectra signal 423. This absolute noise spectra signal 423 is shown in FIG. 11. The absolute noise spectra signal 423 is provided to an IIR lowpass filter element 425. This filter 425 provides an average absolute noise spectra signal 427, representative of average energy within the absolute noise spectra signal 423. The average absolute noise spectra signal 427 is shown in FIG. 12. To reiterate, elements induding the multiple bandpass IIR filter 417, the absolute value element 421, and the IIR lowpass filter element 425 together provide a noise discrimination means for providing a noise spectra signal representative of average energy within a predetermined noise spectra as extracted from the broadband spectra signal.

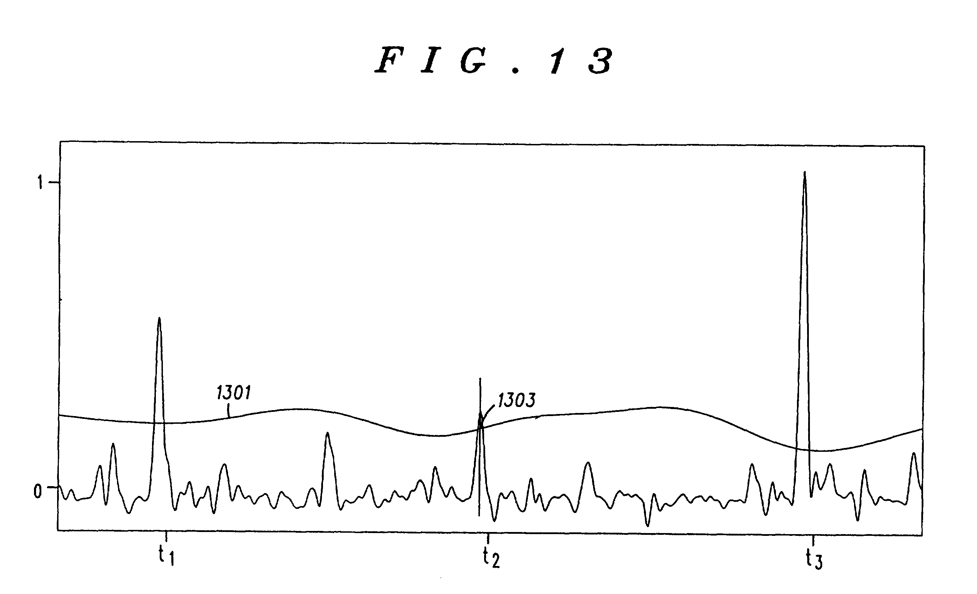

A combining, or summing element 429 subtracts the average noise energy, or average absolute noise spectra signal 427 from the average knock energy, or average absolute knock spectra signal 415. A knock signal 431 is provided at the output of this combining element 429. This knock signal 431 is shown in FIG. 13 and represents the knock information extracted from the broadband spectra signal 103.

The knock logic signal 107 is provided by comparing, with element 453, the knock signal 431 with a threshold 451.

In the Motorola DSP56001 this is represented by a binary number. In an analog system this may be a voltage.

With the system as described above a more accurate and reliable extraction of knock information, or the knock component of the broadband spectra, has been translated into the knock signal 431 and the knock logic signal 107.

A further improvement in accuracy and reliability can be attained by providing a proforma, variable threshold as follows.

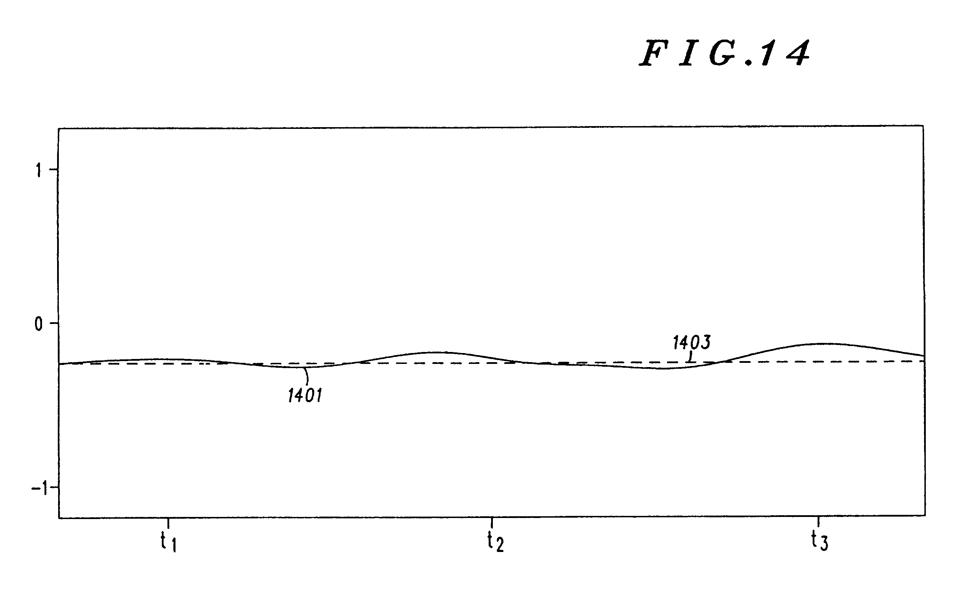

The noise discrimination means 417, 421, and 425 provides a signal representative of average energy within the predetermined noise spectra, estimating the level of average noise energy in the knock spectra. Because of this estimation, the noise discrimination means may output a noise signal in excess of the actual average noise energy within the knock spectra. Because of this, after combination by element 429, the knock signal 431 may have a negative value, representing excess average noise energy. This is shown at reference number 1401 in FIG. 14. This negative value is directly representative of this phenomenon. To compensate for this phenomena additional signal processing is provided as follows.

The knock signal 431 is provided to an element 433 which in turn provides a negative knock-noise signal 435. This will extract only the excessive average noise energy from the knock signal 431. Next the negative knock-noise signal 435 is provided to an IIR lowpass filter 437. This IIR lowpass filter 437 provides an average negative knock-noise signal 439. Next, this signal 439 is offset and scaled to provide an adaptive threshold. A summing means 443 provides an offset average negative knock-noise signal 445 responsive to a subtraction of a predetermine offset adjustment 441 from the average negative knock-noise signal 439. Then a scaling means 449 provides a knock threshold 451 by scaling the product of the offset average negative knock-noise signal 445 by a predetermined threshold multiplier 447. Finally, the knock logic signal 107 is derived from a comparison element 453 that generates a logical one signal responsive to receiving the knock signal 431 of a value greater than the knock threshold 451.

If desired, engine crank angle may be considered to window, or activate, this knock detection system for improved performance. Reference number 1303 in FIG. 13 shows the occurrence of top dead center or TDC for the engine crankshaft. Preferably, the window would be open from TDC to TDC + 40 degrees.

In conclusion, an improved system for detecting the presence of a knock condition by interpreting a broadband spectra signal, in real time during a singular combustion event as measured from an internal combustion engine is described. The system is more reliable, and accurate, can detect knock at high engine speeds, requires minimum calibration and can be easily applied to different engine families.

## Claims

1. An apparatus for detecting the presence of a knock condition by interpreting a broadband spectra signal (103) provided by a spectra measurement device (101) comprising:
a knock discrimination device (401, 405, 409, 413) for providing an average absolute knock spectra signal (415) representative of average energy within a predetermined knock spectra, extracted from the broadband spectra signal (103);
a noise discrimination device (401, 417, 421, 425) for providing an average absolute noise spectra signal (427) representative of average energy within a predetermined noise spectra, extracted from the broadband spectra signal (103);
a summing device (429), coupled to the knock discrimination device (401, 405, 409, 413) for receiving the average absolute knock spectra signal (415), and coupled to the noise discrimination device (401, 417, 421, 425) for receiving the average absolute noise spectra signal (427), the summing device (429) being arranged for providing a knock signal (431) representative of a subtraction of the average absolute noise spectra signal (427) from the average absolute knock spectra signal (415);
the apparatus characterized by:
a device (433) for providing a negative knock-noise signal (435) representing a negative portion of the knock signal (431); and
comparison device (453) for providing a knock logic signal (107) responsive to a comparison between the knock signal (431) and the negative knock-noise signal (435).

2. An apparatus in accordance with claim 1 wherein the knock discrimination device (401, 405, 409, 413) comprises a device (405) for determining more than one knock spectral component from the broadband spectra signal (103) and for providing an average absolute knock spectra signal (415) representative of average energy within a predetermined knock spectra dependent on the more than one knock spectral component.

3. An apparatus in accordance with claim 1 wherein the noise discrimination device (401, 417, 421, 425) comprises a device (417) for determining more than one noise spectral component from the broadband spectra signal and for providing an average absolute noise spectra signal (415) representative of average energy within a predetermined noise spectra dependent on the more than one noise spectral component.

4. An apparatus in accordance with claim 1 wherein the comparison device (453) is arranged for providing a knock logic signal (107) when a magnitude of the knock signal (431) exceeds a magnitude of the negative knock-noise signal (435).

5. An apparatus in accordance with claim 1 further comprising:
an offset adjustment device (443), for providing an offset filtered conditioned knock-noise signal (445), representative of a summation of an offset adjustment (441) and the filtered negative knock-noise signal (439); and
wherein the comparison device (453) is arranged for providing the knock logic signal (107) responsive to a comparison between the knock signal (431) and the offset filtered conditioned knock-noise signal (439).

6. An apparatus in accordance with claim 5 further comprising a threshold multiplier device (449), for providing a scaled offset filtered conditioned knock-noise signal (451) representative of a product of the offset filtered conditioned knock-noise signal (445) and a threshold multiplier (447); and
wherein the comparison device (453) is arranged for providing the knock logic signal (107) responsive to a comparison between the knock signal (431) and the scaled offset filtered conditioned knock-noise signal (451).
7. An apparatus in accordance with claim 1 wherein the knock discrimination device comprises:
a knock absolute value determining device (409) for providing an absolute knock spectra signal (411) representative of an absolute value of the signal present within the knock spectra signal (407), and a knock averaging device (413) for providing an average absolute knock spectra signal (415) representative of average energy within the absolute knock spectra signal (411);
wherein the noise discrimination device comprises:
a noise absolute value determining device (421) for providing an absolute noise spectra signal (423) representative of an absolute value of the signal present within the noise spectra signal (419), and a noise averaging device (425) for providing an average absolute noise spectra signal (427) representative of average energy within the absolute noise spectra signal (423); and wherein the summing device (429) is arranged for providing a knock signal (431) representative of a subtraction of the average absolute noise spectra signal (427) from the average absolute knock spectra signal (415);
wherein the device (433) is arranged for providing a negative knock-noise signal (435) responsive to the knock signal (431); the apparatus further comprising:
a knock-noise averaging device (437) for providing an average negative knock-noise signal (439) responsive to the negative knock-noise signal (435);
another summing device (443) for providing an offset average negative knock-noise signal (445) responsive to a subtraction of a predetermined offset adjustment (441) from the average negative knock-noise signal (439); and
a scaling device (449) for providing a knock threshold (451) responsive to scaling the offset average negative knock-noise signal (445) by a predetermined threshold multiplier (447); and
wherein the comparison device (453) is arranged for providing the knock logic signal (107) responsive to comparing the knock signal (431) to the knock threshold (451).
8. A method for detecting the presence of a knock condition by interpreting a broadband spectra signal provided by a spectra measurement device comprising the steps of:
providing an average absolute knock spectra signal (415) representative of average energy within a predetermined knock spectra, extracted from the broadband spectra signal (103);
providing an average absolute noise spectra signal (427) representative of average energy within a predetermined noise spectra, extracted from the broadband spectra signal (103);
providing a knock signal (431) representative of a subtraction of the average absolute noise spectra signal (427) from the average absolute knock spectra signal (415);
providing a negative knock-noise signal (435) representing a negative portion of the knock signal (431); and
providing a knock logic signal (107) responsive to a comparison between the knock signal (431) and the negative knock-noise signal (435).

## Patentansprüche

1. Vorrichtung zum Erfassen der Gegenwart einer Klopfbedingung durch Interpretieren eines breitbandigen Spektralsignals (103), welches von einer Spektralmeßvorrichtung (101) erfaßbar ist, mit:
einer Klopfermittlungsvorrichtung (401, 405, 409, 413) zum Liefern eines mittleren absoluten Klopfspektrensignals (415) zum Darstellen der mittleren Energie innerhalb eines vorbestimmten Klopfspektrums, welches von dem breitbandigen Spektralsignal (103) extrahiert wird;
einer Rauschermittlungsvorrichtung (401, 417, 421, 425) zum Liefern eines mittleren absoluten Rauschspektrensignals (427) zum Darstellen der mittleren Energie innerhalb eines vorbestimmten Rauschspektrums, welches von dem breitbandigen Spektralsignal (103) extrahiert wird;
einer Summierungsvorrichtung (429), welche mit der Klopfermittlungsvorrichtung (401, 405, 409, 413) verbunden ist, zum Empfangen des mittleren absoluten Klopfspektrensignals (415), und welche mit der Rauschermittlungsvorrichtung (401, 417, 421, 425) verbunden ist, zum Empfangen des mittleren absoluten Rauschspektrensignals (427), wobei die Summierungsvorrichtung (429) derart gestaltet ist, daß sie ein Klopfsignal (431) zum Darstellen einer Subtraktion des mittleren absoluten Rauschspektrensignals (427) von dem mittleren absoluten Klopfspektrensignal (415) liefert;
wobei die Vorrichtung gekennzeichnet ist durch:
eine Vorrichtung (433) zum Liefern eines negativen Klopf-Rausch-Signals (435) zum Darstellen eines negativen Anteils des Klopfsignals (431); und
eine Vergleichsvorrichtung (453) zum Liefern eines Klopflogiksignals (107) ansprechend auf einen Vergleich zwischen dem Klopfsignal (431) und dem negativen Klopf-Rausch-Signal (435).

2. Vorrichtung nach Anspruch 1, dadurch gekennzeichnet, daß die Klopfermittlungsvorrichtung (401, 405, 409, 413) eine Vorrichtung (405) zum Bestimmen von mehr als einer Klopfspektralkomponente aus dem breitbandigen Spektralsignal (103) und zum Liefern eines mittleren absoluten Klopfspektrensignals (415) zum Darstellen der mittleren Energie innerhalb eines vorbestimmten Klopfspektrums abhängig von der mehr als einen Klopfspektralkomponente aufweist.

3. Vorrichtung nach Anspruch 1, dadurch gekennzeichnet, daß die Rauschermittlungsvorrichtung (401, 417, 421, 425) eine Vorrichtung (417) zum Ermitteln von mehr als einer Rauschspektralkomponente aus dem breitbandigen Spektralsignal und zum Liefern eines mittleren absoluten Rauschspektrensignals (415) zum Darstellen der mittleren Energie innerhalb eines vorbestimmten Rauschspektrums abhängig von der mehr als einen Rauschspektralkomponente aufweist.

4. Vorrichtung nach Anspruch 1, dadurch gekennzeichnet, daß die Vergleichsvorrichtung (453) derart gestaltet ist, daß sie ein Klopflogiksignal (107) liefert, wenn eine Größe des Klopfsignals (431) eine Größe des negativen Klopf-Rausch-Signals (435) überschreitet.

5. Vorrichtung nach Anspruch 1, gekennzeichnet durch:
eine Versatzeinstellungsvorrichtung (443) zum Liefern eines versetzten, gefilterten, konditionierten Klopf-Rausch-Signals (445), darstellend eine Summation einer Versatzeinstellung (441) und des gefilterten negativen Klopf-Rausch-Signals (439); und
wobei die Vergleichsvorrichtung (453) derart gestaltet ist, daß sie das Klopflogiksignal (107) ansprechend auf einen Vergleich zwischen dem Klopfsignal (431) und dem versetzten, gefilterten, konditionierten Klopf-Rausch-Signals (439) liefert.

6. Vorrichtung nach Anspruch 5, gekennzeichnet durch eine Schwellmultiplizierervorrichtung (449) zum Liefern eines skalierten, versetzten, gefilterten, konditionierten Klopf-Rausch-Signals (451) zum Darstellen eines Produkts des versetzten, gefilterten, konditionierten Klopf-Rausch-Signals (445) und eines Schwellmultiplizierers (447); und
wobei die Vergleichsvorrichtung (453) derart gestaltet ist, daß sie das Klopflogiksignal (107) ansprechend auf einen Vergleich zwischen dem Klopfsignal (431) und dem skalierten, versetzten, gefilterten, konditionierten Klopf-Rausch-Signal (451) liefert.

7. Vorrichtung nach Anspruch 1, dadurch gekennzeichnet, daß die Klopfermittlungsvorrichtung aufweist:
eine Klopfabsolutwert-Bestimmungsvorrichtung (409) zum Liefern eines absoluten Klopfspektrensignals (411) zum Darstellen eines Absolutwerts des Signals, welches in dem Klopfspektrensignal (407) vorliegt, und eine Klopfmittelungsvorrichtung (413) zum Liefern eines mittleren absoluten Klopfspektrensignals (415) zum Darstellen der mittleren Energie innerhalb des absoluten Klopfspektrensignals (411);
daß die Rauschermittlungsvorrichtung aufweist:
eine Rauschabsolutwert-Bestimmungsvorrichtung (421) zum Liefern eines absoluten Rauschspektrensignals (423) zum Darstellen eines Absolutwerts des Signals, das innerhalb des Rauschspektrensignals (415) vorliegt, und eine Rauschmittelungsvorrichtung (425) zum Liefern eines mittleren absoluten Rauschspektrensignals (427) zum Darstellen der mittleren Energie innerhalb des absoluten Rauschspektrensignals (423); und daß die Summierungsvorrichtung (429) derart gestaltet ist, daß sie ein Klopfsignal (431) ansprechend auf eine Subtraktion des mittleren absoluten Rauschspektrensignals (427) von dem mittleren absoluten Klopfspektrensignal (415) liefert;
daß die Vorrichtung (433) derart gestaltet ist, daß sie ein negatives Klopf-Rausch-Signal (435) ansprechend auf das Klopfsignal (431) liefert; wobei die Vorrichtung weiterhin aufweist:
eine Klopf-Rausch-Mittlungsvorrichtung (437) zum Liefern eines mittleren negativen Klopf-Rausch-Signals (439) ansprechend auf das negative Klopf-Rausch-Signal (435);
eine weitere Summierungsvorrichtung (443) zum Liefern eines versetzten, mittleren negativen Klopf-Rausch-Signals (445) ansprechend auf eine Subtraktion einer vorbestimmten Versatzeinstellung (441) von dem mittleren negativen Klopf-Rausch-Signal (439); und
eine Skalierungsvorrichtung (449) zum Liefern einer Klopfschwelle (451) ansprechend auf die Skalierung des versetzten, mittleren negativen Klopf-Rausch-Signals (445) durch einen vorbestimmten Schwellmultiplizierer (447); und
daß die Vergleichsvorrichtung (453) derart gestaltet ist, daß das Klopflogiksignal (107) ansprechend auf den Vergleich des Klopfsignals (431) mit der Klopfschwelle (451) liefert.

8. Verfahren zum Erfassen der Gegenwart einer Klopfbedingung durch Interpretieren eines breitbandigen Spektralsignals, welches von einer Spektralmeßvorrichtung geliefert wird, mit folgenden Schritten:
Liefern eines mittleren absoluten Klopfspektrensignals (415) zum Darstellen der mittleren Energie innerhalb eines vorbestimmten Klopfspektrums, das von dem breitbandigen Spektralsignal (103) extrahiert wird;
Liefern eines mittleren absoluten Rauschspektrensignals (427) zum Darstellen der mittleren Energie innerhalb eines vorbestimmten Rauschspektrums, welches von dem breitbandigen Spektralsignal (103) extrahiert wird;
Liefern eines Klopfsignals (431) zum Darstellen einer Subtraktion des mittleren absoluten Rauschspektrensignals (427) von dem mittleren absoluten Klopfspektrensignal (415);
Liefern eines negativen Klopf-Rausch-Signals (435) zum Darstellen eines negativen Teils des Klopfsignals (431); und
Liefern eines Klopflogiksignals (107) ansprechend auf einen Vergleich zwischen dem Klopfsignal (431) und dem negativen Klopf-Rausch-Signal (435).

## Revendications

1. Dispositif destiné à détecter la présence d'une condition de cliquetis en interprétant un signal de spectre à large bande (103) fourni par un dispositif de mesure de spectre (101) comprenant :
un dispositif de discrimination de cliquetis (401, 405, 409, 413) destiné à fournir un signal de spectre de cliquetis absolu moyen (415) représentatif de l'énergie moyenne à l'intérieur d'un spectre de cliquetis prédéterminé, extrait à partir du signal de spectre à bande large (103),
un dispositif de discrimination de bruit (401, 417, 421, 425) destiné à fournir un signal de spectre de bruit absolu moyen (427) représentatif de l'énergie moyenne à l'intérieur d'un spectre de bruit prédéterminé, extrait à partir du signal de spectre à bande large (103),
un dispositif de sommation (429), associé au dispositif de discrimination de cliquetis (401, 405, 409, 413) afin de recevoir le signal de spectre de cliquetis absolu moyen (415), et associé au dispositif de discrimination de bruit (401, 417, 421, 425) afin de recevoir le signal de spectre de bruit absolu moyen (427), le dispositif de sommation (429) étant conçu de façon à fournir un signal de cliquetis (431) représentatif d'une soustraction du signal de spectre de bruit absolu moyen (427) à partir du signal de spectre de cliquetis absolu moyen (415),
le dispositif étant caractérisé par :
un dispositif (403) destiné à fournir un signal de cliquetis-bruit négatif (435) représentant une partie négative du signal de cliquetis (431), et
un dispositif de comparaison (453) destiné à fournir un signal logique de cliquetis (107) en réponse à une comparaison entre le signal de cliquetis (431) et le signal de cliquetis-bruit négatif (435).

2. Dispositif selon la revendication 1, dans lequel le dispositif de discrimination de cliquetis (401, 405, 409, 413) comprend un dispositif (405) destiné à déterminer plus d'une composante spectrale de cliquetis à partir du signal de spectre à large bande (103) et à fournir un signal de spectre de cliquetis absolu moyen (415) représentatif de l'énergie moyenne à l'intérieur d'un spectre de cliquetis prédéterminé en fonction de la plus d'une composante spectrale de cliquetis.

3. Dispositif selon la revendication 1, dans lequel le dispositif de discrimination de bruit (401, 417, 421, 425) comprend un dispositif (417) destiné à déterminer plus d'une composante spectrale de bruit à partir du signal de spectre à large bande et à fournir un signal de spectre de bruit absolu moyen (415) représentatif de l'énergie moyenne à l'intérieur d'un spectre de bruit prédéterminé en fonction de la plus d'une composante spectrale de bruit.

4. Dispositif selon la revendication 1, dans lequel le dispositif de comparaison (453) est conçu de façon à fournir un signal logique de cliquetis (107) lorsque l'amplitude du signal de cliquetis (431) dépasse l'amplitude du signal de cliquetis-bruit négatif (435).

5. Dispositif selon la revendication 1, comprenant en outre :
un dispositif d'ajustement de décalage (443), destiné à fournir un signal de cliquetis-bruit conditionné par un filtrage et un décalage (445), représentatif d'une sommation d'un ajustement de décalage (441) et du signal de cliquetis-bruit négatif filtré (439), et
dans lequel le dispositif de comparaison (453) est conçu de façon à fournir le signal logique de cliquetis (107) en réponse à une comparaison entre le signal de cliquetis (431) et le signal de cliquetis-bruit conditionné par un filtrage et un décalage (439).

6. Dispositif selon la revendication 5, comprenant en outre un dispositif multiplicateur de seuil (449), destiné à fournir un signal de cliquetis-bruit conditionné par un filtrage et un décalage mis à l'échelle (451), représentatif d'un produit du signal de cliquetis-bruit conditionné par un filtrage et un décalage (445) et d'un multiplicateur de seuil (447), et
dans lequel le dispositif de comparaison (453) est conçu de façon à fournir le signal logique de cliquetis (107) en réponse à une comparaison entre le signal de cliquetis (431) et le signal de cliquetis-bruit conditionné par un filtrage et un décalage mis à l'échelle (451).

7. Dispositif selon la revendication 1, dans lequel le dispositif de discrimination de cliquetis comprend :
un dispositif de détermination de valeur absolue de cliquetis (409) destiné à fournir un signal de spectre de cliquetis absolu (411) représentatif d'une valeur absolue du signal présent à l'intérieur du signal de spectre de cliquetis (407), et un dispositif de mise en moyenne de cliquetis (413) destiné à fournir un signal de spectre de cliquetis absolu moyen (415) représentatif de l'énergie moyenne à l'intérieur du signal de spectre de cliquetis absolu (411),
dans lequel le dispositif de discrimination de bruit comprend :
un dispositif de détermination de valeur absolue de bruit (421) destiné à fournir un signal de spectre de bruit absolu (423) représentatif d'une valeur absolue du signal présent à l'intérieur du signal de spectre de bruit (419), et un dispositif de mise en moyenne de bruit (425) destiné à fournir un signal de spectre de bruit absolu moyen (427) représentatif de l'énergie moyenne à l'intérieur du signal de spectre de bruit absolu (423), et dans lequel le dispositif de sommation (429) est conçu de façon à fournir un signal de cliquetis (431) représentatif d'une soustraction du signal de spectre de bruit absolu moyen (427) à partir du signal de spectre de cliquetis absolu moyen (415),
dans lequel le dispositif (433) est conçu de façon à fournir un signal de cliquetis-bruit négatif (435) en réponse au signal de cliquetis (431), le dispositif comprenant en outre :
un dispositif de mise en moyenne de cliquetis-bruit (437) destiné à fournir un signal de cliquetis-bruit négatif moyen (439) en réponse au signal de cliquetis-bruit négatif (435),
un autre dispositif de sommation (443) destiné à fournir un signal de cliquetis-bruit négatif moyen décalé (445) en réponse à une soustraction d'un ajustement de décalage prédéterminé (441) à partir du signal de cliquetis-bruit négatif moyen (439), et
un dispositif de mise à l'échelle (449) destiné à fournir un seuil de cliquetis (451) en réponse à la mise à l'échelle du signal de cliquetis-bruit négatif moyen décalé (445) à l'aide d'un multiplicateur de seuil prédéterminé (447), et
dans lequel le dispositif de comparaison (453) est conçu de façon à fournir le signal logique de cliquetis (107) en réponse à la comparaison du signal de cliquetis (431) au seuil de cliquetis (451).

8. Procédé de détection de la présence d'une condition de cliquetis en interprétant un signal de spectre à bande large fourni par un dispositif de mesure de spectre, comprenant les étapes consistant à :
fournir un signal de spectre de cliquetis absolu moyen (415) représentatif de l'énergie moyenne à l'intérieur d'un spectre de cliquetis prédéterminé, extrait à partir du signal de spectre à bande large (103),
fournir un signal de spectre de bruit absolu moyen (427) représentatif de l'énergie moyenne à l'intérieur d'un spectre de bruit prédéterminé, extrait à partir du signal de spectre à bande large (103),
fournir un signal de cliquetis (431) représentatif d'une soustraction du signal de spectre de bruit absolu moyen (427) à partir du signal de spectre de cliquetis absolu moyen (415),
fournir un signal de cliquetis-bruit négatif (435) représentant une partie négative du signal de cliquetis (431), et
fournir un signal logique de cliquetis (107) en réponse à une comparaison entre le signal de cliquetis (431) et le signal de cliquetis-bruit négatif (435).
